# FASCICULE DE BREVET EUROPEEN

(11) **EP 2 267 933 B1**
(45) Date de publication et mention de la délivrance du brevet: **24.01.2018**
(21) Numéro de dépôt: 10166889.5
(22) Date de dépôt: 22.06.2010
(51) Int. Cl.: H04L 1/18, H04L 1/16, H04L 1/00

(54) **PROCÉDÉ D'ACCUSÉ DE RÉCEPTION D'UN SYSTÈME DE COMMANDE À DISTANCE D'APPAREILS DOMESTIQUES**
Empfangsbestätigungsverfahren eines ferngesteuerten Systems von Hausgeräten
Acknowledgement procedure of a remote control system for domestic appliances

(30) Priorité: 23.06.2009 FR 0954241
(43) Date de publication de la demande: 29.12.2010
(73) Titulaire: Delta Dore, 35270 Bonnemain (FR)
(72) Inventeur: Giot, Lionel, 35520, MONTREUIL LE GAST (FR); Leduc, Benoît, 22830, PLOUHASNE (FR)
(74) Mandataire: Le Guen-Maillet

(56) Documents cités:
- EP-A2- 1 881 640
- WO-A2-02/23814

## Description

La présente invention concerne un procédé d'accusé de réception d'une commande émise par un équipement de gestion d'un système de commande d'appareils domestiques par signaux radiofréquences.

L'invention peut, de manière non limitative, s'appliquer à un système de commande d'appareils domestiques tels des volets roulants.

Il est connu des systèmes de commande d'appareils domestiques qui permettent à partir d'un équipement de gestion de commander, par émission d'une commande, soit individuellement chaque appareil domestique qui est destinataire de cette commande, soit simultanément un ensemble de ces appareils qui sont alors tous destinataires de cette commande.

Pour cela, une phase préalable, dite d'association, est requise afin que l'équipement de gestion reconnaisse chaque appareil domestique destinataire d'une commande ou chaque ensemble d'appareils domestiques destinataires de cette commande, c'est-à-dire celui ou ceux avec lesquels il va échanger par la suite des signaux relatifs à cette commande.

Une fois l'association entre appareil domestique et équipement de gestion réalisée, l'équipement de gestion est à même d'émettre la commande et chaque
appareil domestique destinataire ainsi associé est également à même de transmettre en réponse un accusé de réception de la commande en émettant un signal porteur de cet accusé de réception et, ce, à destination de l'équipement de gestion. Cependant, comme l'équipement de gestion et les appareils domestiques communiquent par échange de signaux radiofréquences, il peut se produire qu'un signal porteur d'un tel accusé de réception ne soit pas reçu par l'équipement de gestion pour des raisons liées à une interruption ou une mauvaise qualité momentanée de la communication entre l'appareil domestique alors émetteur et l'équipement de gestion alors récepteur.

La demande de brevet EP1881640 divulgue un procédé d'accusé de réception de communication dans un réseau sans fil.

Le problème résolu par la présente invention est de fiabiliser la transmission des accusés de réception qui sont émis par les appareils domestiques à destination de l'équipement de gestion de manière à ce que ce dernier obtienne une information d'accusé de réception qui reflète fidèlement si chaque appareil domestique destinataire d'une commande émise a ou non reçu cette commande.

A cet effet, la présente invention concerne un procédé d'accusé de réception d'une commande émise par un équipement de gestion d'un système de commande d'appareils domestiques par signaux radiofréquences. Le procédé est caractérisé en ce qu'il comporte :
- une étape de réception par un appareil domestique d'un signal porteur d'une information d'acquittement, ladite information d'acquittement comportant entre autres une information d'accusé de réception qui reflète si chaque appareil domestique destinataire de la commande a ou non reçu cette commande,
- une étape de mise à jour par un appareil domestique de l'information d'accusé de réception comprise dans une information d'acquittement qu'il a reçue à partir d'une information de mise à jour qui reflète si cet appareil domestique a ou non préalablement reçu ladite commande,
- une étape de diffusion par un appareil domestique d'un signal porteur d'une information d'acquittement qui comporte entre autres l'information d'accusé de réception ainsi mise à jour,
- une étape de réception par l'équipement de gestion d'un signal porteur d'une information d'acquittement et
- une étape de mise à jour par l'équipement de gestion d'une information d'accusé de réception qu'il a préalablement mémorisée à partir de l'information d'accusé de réception comprise dans une information d'acquittement reçue.

Ainsi, la communication entre appareil domestique d'un signal porteur d'une information d'acquittement, qui reflète si chaque appareil domestique destinataire d'une commande a ou non reçu cette commande, permet d'augmenter la probabilité que l'équipement de gestion puisse avoir en retour une information fiable concernant la réception de la commande qu'il a émise. Avantage qui n'est pas apporté par les systèmes actuels de commande à distance qui, d'une part, transmettent un signal qui est porteur d'une information d'accusé de réception qui reflète uniquement si un seul appareil domestique a ou non reçu la commande et, d'autre part, qui ne transmette un tel signal de manière point-à-point c'est-à-dire d'un seul appareil domestique vers l'équipement de gestion.

Selon un mode de réalisation, les signaux radiofréquences étant émis dans une bande de fréquence prédéfinie dont l'utilisation temporelle est définie par une trame de slots temporels, le procédé est caractérisé en ce qu'il comporte :
- une étape d'allocation des slots de trame relative à chaque commande susceptible d'être émise par l'équipement de gestion à destination d'au moins un appareil domestique, au cours de laquelle au moins un slot de la trame est dédié à chaque appareil domestique pour que cet appareil domestique diffuse un signal porteur d'une information d'acquittement,
- au cours de ladite étape de réception par un appareil domestique, l'appareil domestique écoute pendant chaque slot de la trame, autre que celui ou ceux qui leur sont dédiés, dans l'attente de réception d'un signal porteur d'une information d'acquittement,
- au cours de ladite étape de diffusion par un appareil domestique, un signal porteur de l'information d'accusé de réception mise à jour est diffusé pendant le ou les slots qui sont dédiés à cet appareil domestique, et
- au cours de ladite étape de réception par l'équipement de gestion, l'équipement de gestion écoute pendant chaque slot de la trame dans l'attente de réception d'un signal porteur d'une information d'acquittement.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
La Fig. 1 représente schématiquement un système de commande à distance d'appareils domestiques,
La Fig. 2 représente un diagramme des étapes du procédé d'accusé de réception d'une commande selon l'invention,
La Fig. 3 représente une allocation des slots d'une trame,
La Fig. 4 représente un exemple d'une allocation des slots sⱼ d'une trame,
La Fig. 5 est une illustration d'un exemple de deux trames successives formées chacune de huit slots,
La Fig. 6 représente un exemple d'exécution du procédé d'accusé de réception d'une commande,
La Fig. 7 représente une illustration d'une synchronisation entre trame,
La Fig. 8 représente un exemple de trame dans laquelle deux slots de trame sont dédiés à l'équipement de gestion,
Les Fig. 9a et 9b représentent deux exemples de l'information d'acquittement,
La Fig. 10 représente un mode de réalisation d'une architecture interne d'un appareil domestique selon l'invention, et
La Fig. 11 représente un mode de réalisation d'une architecture interne de l'équipement de gestion.

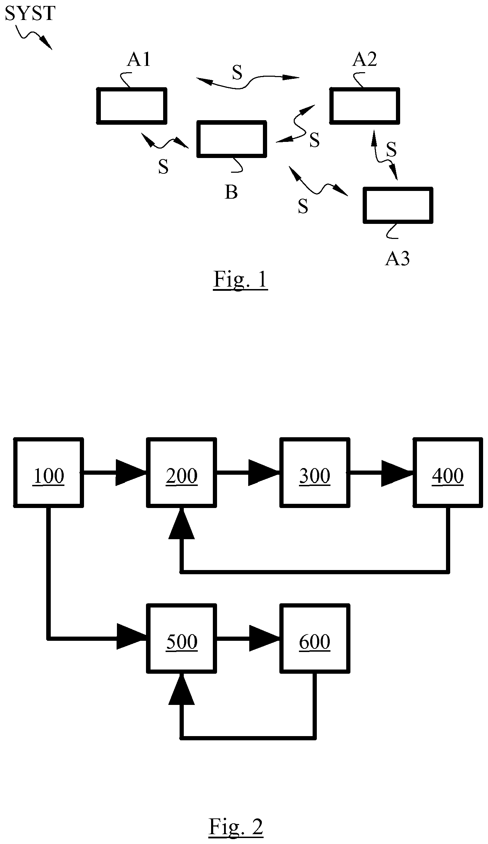

A la Fig. 1 est représenté un exemple de système SYST de commande à distance par signaux radiofréquences. Le système SYST comporte un équipement de gestion B et trois appareils domestiques A1, A2, et A3. La numérotation des appareils domestiques est faite, par exemple, selon leur distance vis-à-vis de l'équipement de gestion B ; l'appareil domestique A1 étant le plus proche et l'appareil domestique A3 étant le plus éloigné de l'équipement de gestion B.

Les appareils domestiques Ai (i=1,2,3) et l'équipement B sont munis de moyens de communication qui leur permettent d'échanger entre eux des signaux radiofréquences S.

Plus précisément, ces moyens de communication permettent à chaque appareil domestique de diffuser un signal S dans une zone géographique de rayon R et, permettent à chaque appareil domestique Ai ainsi qu'à l'équipement de gestion B de recevoir un signal S et d'en extraire les informations qu'ils portent à la condition que le récepteur se trouve à une distance au plus égale à R de l'émetteur. Par la suite, nous considèrerons que les appareils domestiques et l'équipement de gestion sont à portée les uns des autres et qu'ils peuvent communiquer entre eux en fonctionnement normal.

Le positionnement relatif des appareils domestiques entre eux mais également vis-à-vis de l'équipement de gestion peut être très variable : certains appareils domestiques peuvent être à la portée de plusieurs autres appareils domestiques et/ou de l'équipement B.

La Fig. 2 représente un diagramme des étapes du procédé selon l'invention.

Tous les appareils domestiques Ai du système SYST ne sont pas forcément destinataires d'une commande émise. C'est-à-dire qu'une partie seulement des appareils domestiques Ai du système SYST peut être destinataire de la commande C ou que l'ensemble de ces appareils domestiques Ai est destinataire de cette commande C. En particulier, une commande C peut n'être destinée qu'à un seul des appareils domestiques du système SYST. Toutefois, bien qu'une commande C ne soit destinée qu'à un nombre restreint d'appareils domestiques, l'ensemble des appareils domestiques du système SYST met en oeuvre systématiquement les étapes décrites ci-dessous du procédé d'accusé de réception.

Par la suite, nous considèrerons que l'ensemble des appareils domestiques Ai du système SYST est destinataire d'une commande C.

Le procédé comporte une étape 200 de réception par un appareil domestique Ai d'un signal porteur d'une information d'acquittement IACK. L'information d'acquittement IACK comporte, entre autres, une information d'accusé de réception

IAR qui reflète si chaque appareil domestique destinataire de ladite commande C a ou non reçu cette commande.

Le procédé comporte également une étape 300 de mise à jour par un appareil domestique Ai de l'information d'accusé de réception IAR comprise dans une information d'acquittement IACK qu'il a reçue à partir d'une information de mise à jour IMJi qui reflète si cet appareil domestique Ai a ou non préalablement reçu ladite commande C.

Le procédé comporte, de plus, une étape 400 de diffusion par l'appareil domestique Ai d'un signal porteur d'une information d'acquittement IACK qui comporte entre autres l'information d'accusé de réception IAR ainsi mise à jour. Cette diffusion est à destination de chaque appareil domestique Ai qui se trouve à portée de l'appareil émetteur et à destination de l'équipement de gestion B si il se trouve également à portée.

Par ailleurs, le procédé comporte une étape 500 de réception par l'équipement de gestion B d'un signal porteur d'une information d'acquittement IACK et une étape 600 de mise à jour par l'équipement de gestion B d'une information d'accusé de réception IARB qu'il a préalablement mémorisée à partir de l'information d'accusé de réception IAR comprise dans une information d'acquittement IACK reçue.

Selon un mode de réalisation du procédé, l'information d'accusé de réception IAR est portée par un ensemble d'autant de bits que d'appareils domestiques destinataires d'une commande C, en l'occurrence N. Chacun des N bits de l'information d'accusé de réception IAR porte l'état de réception de la commande C par l'appareil domestique Ai auquel ce bit se réfère.

Selon un mode de réalisation du procédé, l'information d'acquittement IACK comporte également des données relatives à un voire plusieurs états de chacun des appareils domestiques destinataires de la commande C.

Ces données sont alors extraites par l'équipement de gestion B à des fins de traitement.

Ces données sont constituées d'autant de mots de bits Mᵢ que d'appareils domestiques destinataires d'une commande C.

Par exemple, dans le cas où les appareils domestiques sont des volets roulants, chaque mot de bits Mᵢ se résume à un seul bit qui porte l'état binaire d'ouverture ou de fermeture du volet roulant. Selon un autre exemple, chaque mot de bits Mᵢ comporte plus d'un seul bit afin de porter une valeur autre que binaire notamment pour que chaque volet roulant communique à l'équipement de gestion B son pourcentage d'ouverture/fermeture, une valeur de température mesurée au niveau du volet, etc.

L'information d'acquittement IACK est alors utilisée par l'équipement de gestion B afin, d'une part, de recevoir des informations concernant l'état de chaque appareil domestique et d'utiliser l'information d'accusé de réception comme une validation des informations portées par ces données et ce en plus de sa fonction d'accusé de réception de la commande C.

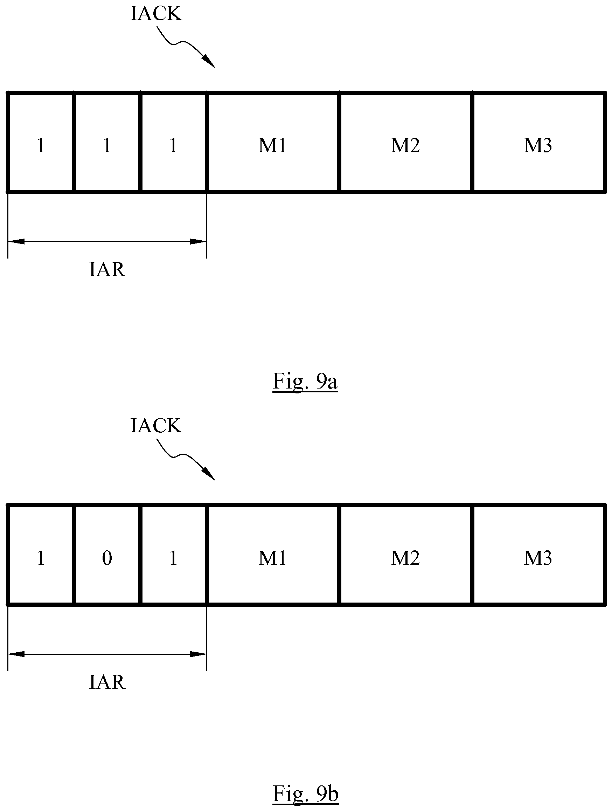

Les Fig. 9a et 9b représentent deux exemples de l'information d'acquittement IACK reçue par l'équipement de gestion B et l'interprétation que cet équipement en fait.

Selon ces deux exemples, l'information d'acquittement IACK est formée d'un mot de trois bits portant l'information IAR, c'est-à-dire que chacun des bits porte l'accusé de réception de la commande C d'un des appareils domestiques A1, A2 et A3, et de trois mots M₁, M₂ et M₃ de huit bits, chacun des mots M₁, M₂ et M₃ porte une donnée concernant par exemple une mesure faite par chaque appareil domestique suite à la réception de la commande C.

Dans le premier exemple, illustré à la Fig. 9a, les trois bits de l'information d'accusé de réception IAR sont égaux à 1 indiquant à l'équipement de gestion B que les données reçues peuvent être prises en considération pour un traitement particulier.

Dans le second exemple, illustré à la Fig. 9b, le deuxième bit de l'information d'accusé de réception IAR est égal à 0 indiquant alors à l'équipement de gestion que d'une part, l'appareil domestique A2 n'a pas reçu la commande C préalablement émise et que d'autre part, la valeur de mesure portée par le mot de bits associé est caduque.

La mise en oeuvre de l'invention n'est pas liée à un système particulier de communications entre les appareils domestiques et entre ces appareils et l'équipement de gestion. Ce système doit toutefois permettre que chaque appareil domestique puisse diffuser un signal radiofréquence, que chaque appareil domestique puisse recevoir un signal radiofréquence émis par un autre appareil domestique, et que l'équipement de gestion puisse recevoir un signal radiofréquence émis par un appareil domestique du système SYST.

Les systèmes de communications de type CDMA (Code Division Multiple Access), TDMA (Time Division Multiple Access) sont des systèmes qui peuvent être utilisés.

Par la suite, un mode de réalisation de l'invention est décrit dans le cas d'un système de communication de type TDMA. En particulier, les signaux radiofréquences S utilisent une même bande de fréquences centrée sur une fréquence de 868, 95 MHz et de largeur de +/- 57 KHz. La durée d'un bit émis est de 25 *µs* et la modulation utilisée est de type FSK (Frequency Shift Keying en anglais).

Selon un système de type TDMA, l'utilisation temporelle de la bande de fréquence dédiée est divisée en intervalles de temps, appelés slots, qui sont alors alloués ou dédiés, soit à l'équipement de gestion B, soit aux appareils domestiques Ai. L'organisation temporelle de l'utilisation de la bande de fréquence, c'est-à-dire le positionnement temporel des slots, forme une trame T du signal S.

Le procédé d'accusé de réception d'une commande C comporte alors une étape 100 d'allocation des slots de la trame T relative à une commande C susceptible d'être émise par l'équipement de gestion B à destination d'appareils domestiques.

De préférence, dans le cas où l'équipement de gestion B est susceptible d'émettre plusieurs commandes C, une allocation particulière des slots sⱼ de la trame T est définie par commande C. Par ailleurs, seule une partie des slots de trame peut être allouée par commande C.

L'étape 100 est éventuellement incluse dans une phase préalable d'association du système SYST.

Suite à l'étape 100, pour chaque commande C susceptible d'être émise par l'équipement de gestion B, tous les appareils domestiques Ai et l'équipement de gestion B sont synchronisés entre eux en temps par connaissance à la fois d'un temps de référence, noté t0, et des temps de début des slots qui leur sont dédiés pour la diffusion d'un signal S porteur d'une information d'acquittement IACK. La détermination du temps de référence t0 et des temps de début de chaque slot ainsi que leur connaissance par chacun des appareils domestiques et par l'équipement de gestion est mise en oeuvre par exemple lors d'échanges de signaux entre eux qui se produisent, par exemple, lors de la phase d'association et une fois qu'au moins une allocation des slots de trame a été réalisée (étape 100).

Ainsi, à la suite de l'étape d'allocation, pour chaque commande C susceptible d'être émise par l'équipement de gestion B, l'équipement de gestion B et chaque appareil domestique Ai connaissent les slots qui leurs sont dédiés pour cette commande.

Au cours de l'étape 100, au moins un slot de la trame T est dédié à chaque appareil domestique Ai pour que cet appareil domestique Ai diffuse d'un signal S porteur d'une information d'acquittement IACK. Un slot dédié à un appareil domestique Ai est noté s_{Ai}.

Selon un mode de réalisation de l'étape 100, un seul slot s_{Ai} de la trame T est dédié à chaque appareil domestique Ai pour qu'il diffuse d'un signal porteur de l'information d'acquittement IACK.

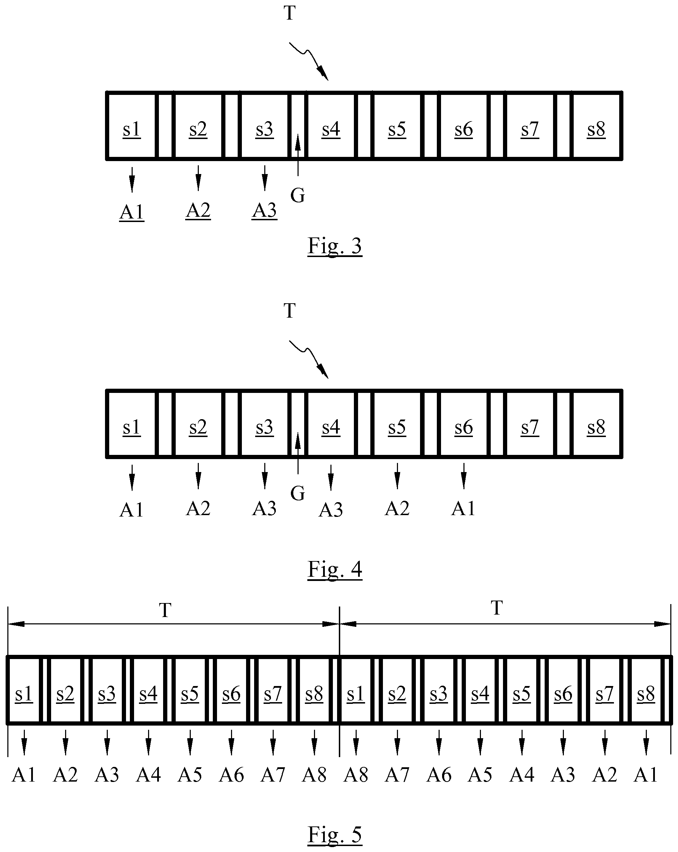

La Fig. 3 représente une telle allocation des slots d'une trame T dans le cas où les trois (N=3) appareils domestiques Ai sont destinataires de la commande C et que la trame est constituée de huit slots. Selon cet exemple, les slots s₁, s₂ et s₃ sont respectivement dédiés aux appareils A1, A2 et A3.

On comprend que dans le cas où le nombre d'appareils domestiques destinataires d'une commande augmente, le nombre de slots dédiés de la trame T augmente en conséquence jusqu'à ce que tous les slots de la trame T, en l'occurrence huit, soient tous alloués.

Ainsi, selon une telle allocation des slots de trame, l'équipement de gestion B peut émettre une commande à destination au maximum de huit appareils domestiques.

On remarque également sur la Fig. 3 qu'un temps de garde G est ménagé entre les slots sⱼ de la trame T afin d'éviter tout recouvrement temporel entre ces slots.

Selon un autre mode de réalisation de l'étape 100, deux slots s_{Ai1} et s_{Ai2} de la trame T sont dédiés à chaque appareil domestique Ai pour qu'il diffuse d'un signal porteur de l'information d'acquittement IACK deux fois par trame.

La Fig. 4 représente un exemple d'une telle allocation des slots sⱼ d'une trame T dans le cas où les trois appareils domestiques Ai sont destinataires de la commande C et que la trame est constituée de huit slots (K=8). Selon cet exemple, le slot s_{Ai1} est le slot sⱼ et le slot s_{Ai2} est le slot s_{2N-j+1}. Ainsi, les slots s₁ et s₆ sont dédiés à l'appareil domestique A1, les slots s₂ et s₅ sont dédiés à l'appareil domestique A2 et les slots s₃ et s₄ sont dédiés à l'appareil domestique A3.

On peut noter qu'en multipliant le nombre de slots dédiés à chaque appareil domestique, c'est-à-dire le nombre de diffusions d'un signal porteur d'une même information d'acquittement IACK par trame, la fiabilité de la transmission de cette information s'en trouve accrue. Cependant, en pratique, la durée totale de la trame T étant généralement contrainte à une valeur fixe, plus le nombre de slots dédiés à chaque appareil domestique est importante et plus la durée de chaque slot est diminuée, limitant alors la taille de l'information d'acquittement transmise par slot.

Selon un mode de réalisation du procédé, au moins un slot dédié à un appareil domestique et au moins un slot dédié à un autre appareil domestique appartiennent à deux trames T successives.

Ce mode de réalisation est avantageux car il permet d'augmenter le nombre d'appareils domestiques destinataires d'une même commande C émise par l'équipement de gestion B sans pour autant diminuer la durée de chaque slot de la trame T.

La Fig. 5 est une illustration d'un exemple de deux trames T successives formées chacune de huit slots.

Selon cet exemple, au maximum huit appareils domestiques Ai pourront être gérés par l'équipement de gestion B par commande C du fait que deux slots sont alloués par appareil domestique, l'un dans la première des deux trames successives T et l'autre dans la seconde des deux trames successives T.

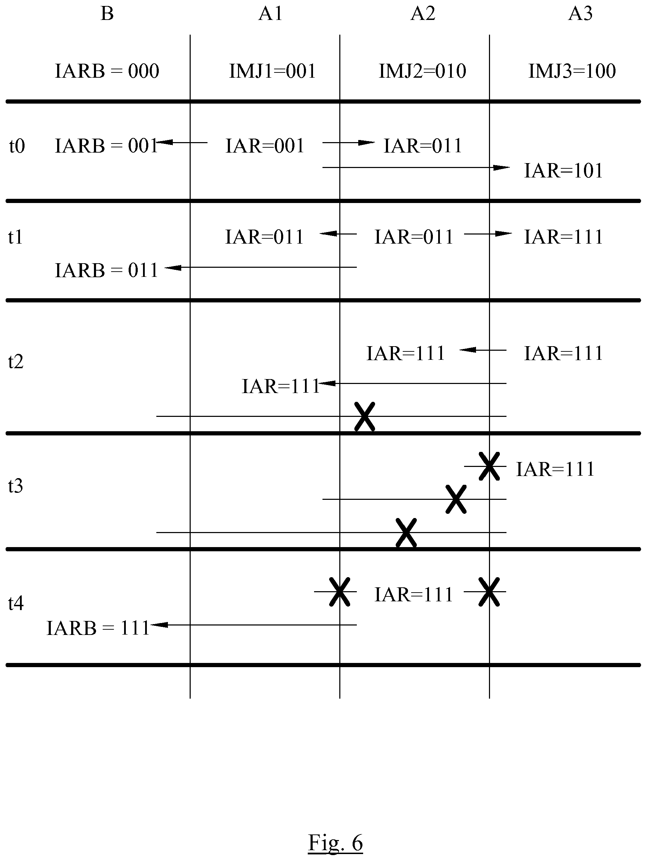

La Fig. 6 représente un exemple d'exécution du procédé d'accusé de réception d'une commande dans le cas du système SYST illustré à la Fig. 1, dans le cas où l'information d'accusé de réception IAR est un mot de trois bits (N=3), et dans le cas où les slots de la trame T ont été alloués selon la Fig. 4.

Admettons que suite à l'émission d'une commande C, les appareils domestiques A1 et A2 aient reçu cette commande et que l'appareil domestique A3 ne l'ait pas reçue.

De manière générale, suite à l'émission d'une commande C par l'équipement de gestion B, l'équipement de gestion B scrute les slots sⱼ de la trame T dans l'attente de réception d'un signal S porteur d'une information d'acquittement IACK (étape 500).

Suite à la réception d'une information d'acquittement IACK, l'équipement de gestion B met à jour l'information d'accusé de réception IARB en réalisant, par exemple, un OU logique entre l'information d'accusé de réception IARB préalablement obtenue et l'information d'accusé de réception qui est portée par l'information d'acquittement ACK (étape 600).

Par ailleurs, au cours de l'étape 200, chaque appareil domestique scrute les slots sⱼ de la trame T autres que celui ou ceux qui lui sont dédiés dans l'attente de réception d'un signal S porteur d'une information d'acquittement IACK.

Suite à la réception d'une information d'acquittement IACK, chaque appareil domestique met à jour l'information d'accusé de réception reçue IAR en réalisant, par exemple, un OU logique entre l'information d'accusé de réception IAR reçue et l'information de mise à jour IMJi qui reflète si cet appareil domestique a ou non préalablement reçu ladite commande (étape 300). En l'occurrence, l'information de mise à jour IMJi est un mot de trois bits tous égaux à 0 dans le cas où l'appareil domestique Ai n'a pas reçu préalablement la commande. Dans le cas où l'appareil domestique Ai a reçu préalablement la commande C, les trois bits du mot restent à 0 excepté le bit dont la position est égale au numéro attribué à l'appareil domestique Ai. Par la suite, on considèrera que les trois appareils domestiques A1, A2 et A3 ont tous reçus la commande C. Ainsi, l'information de mise à jour IMJ1, relative à l'appareil domestique A1 sera 001, celle relative à l'appareil domestique A2 sera 010 et celle relative à l'appareil domestique A3 sera 100.

De retour à la Fig. 6, au temps de référence t0 de début de la trame T, l'appareil domestique A1 diffuse un signal S porteur d'une information d'acquittement IACK. Du fait qu'il n'a pas reçu préalablement d'information d'acquittement, l'information d'acquittement IACK porte une information d'accusé de réception qui est égale à l'information de mise à jour IMJ1, c'est-à-dire que l'étape 200 n'est pas réalisée et que l'appareil domestique A1 diffuse un signal S porteur d'une information d'acquittement IACK qui comporte une information d'accusé de réception égale à 001.

L'appareil domestique A2 reçoit alors un signal S porteur de l'information IACK qui porte une information d'accusé de réception IAR égale à 001 et met à jour cette information en réalisant un OU logique entre l'information d'accusé de réception 001 ainsi reçue et son information de mise à jour IMJ2 010. L'information d'accusé de réception IAR connue de l'appareil domestique A2 est alors égale à 011.

Par ailleurs, l'appareil domestique A3 reçoit alors un signal S porteur de l'information IACK qui porte une information d'accusé de réception IAR égale à 001 et met à jour cette information en réalisant un OU logique entre l'information d'accusé de réception 001 ainsi reçue et son information de mise à jour IMJ3 100. L'information d'accusé de réception IAR connue de l'appareil domestique A3 est alors égale à 101.

Enfin, l'équipement de gestion B reçoit également un signal S porteur de l'information IACK qui porte une information d'accusé de réception IAR égale à 001 et met à jour cette information en réalisant un OU logique entre l'information d'accusé de réception IARB qui vaut alors 000 (valeur initiale) et l'information d'accusé de réception 001 reçue. L'information d'accusé de réception IARB connue de l'équipement de gestion B est alors égale à 001, lui confirmant que l'appareil domestique A1 a reçu la commande C.

Au temps t1 de début du slot s2, l'appareil domestique A2 diffuse un signal S porteur d'une information d'acquittement IACK qui porte l'information d'accusé de réception IAR qu'il connaît et qui vaut en l'occurrence 011.

L'appareil domestique A1 reçoit alors un signal S porteur de l'information IACK qui porte une information d'accusé de réception IAR égale à 011 et met à jour cette information en réalisant un OU logique entre l'information d'accusé de réception 011 ainsi reçue et son information de mise à jour IMJ1 001. L'information d'accusé de réception IAR connue de l'appareil domestique A1 est alors égale à 011.

L'appareil domestique A3 reçoit alors un signal S porteur de l'information IACK qui porte une information d'accusé de réception IAR égale à 011 et met à jour cette information en réalisant un OU logique entre l'information d'accusé de réception 011 ainsi reçue et son information de mise à jour IMJ3 100. L'information d'accusé de réception IAR connue de l'appareil domestique A3 est alors égale à 111.

L'équipement de gestion B reçoit également un signal S porteur de l'information IACK qui porte une information d'accusé de réception IAR égale à 011 et met à jour cette information en réalisant un OU logique entre l'information d'accusé de réception IARB qui vaut alors 001 et l'information d'accusé de réception 011 ainsi reçue. L'information d'accusé de réception IARB connue de l'équipement de gestion B est alors égale à 011, lui confirmant que les appareils domestiques A1 et A2 ont reçu la commande C.

Au temps t2 de début du slot s3, l'appareil domestique A3 diffuse un signal S porteur d'une information d'acquittement IACK qui porte l'information d'accusé de réception IAR qu'il connaît et qui vaut en l'occurrence 111.

Malencontreusement, un problème de communication survient empêchant que le signal S porteur de l'information d'acquittement IACK diffusé par l'appareil domestique A3 ne parvienne à l'équipement de gestion B.

L'appareil domestique A1 reçoit un signal S porteur de l'information IACK qui porte une information d'accusé de réception IAR égale à 111 et met à jour cette information en réalisant un OU logique entre l'information d'accusé de réception 111 ainsi reçue et son information de mise à jour IMJ1 001. L'information d'accusé de réception IAR connue de l'appareil domestique A1 est alors égale à 111.

L'appareil domestique A2 reçoit également un signal S porteur de l'information IACK qui porte une information d'accusé de réception IAR égale à 111 et met à jour cette information en réalisant un OU logique entre l'information d'accusé de réception 111 ainsi reçue et son information de mise à jour IMJ2 010. L'information d'accusé de réception IAR connue de l'appareil domestique A2 est alors égale à 111.

L'information d'accusé de réception IARB connue de l'équipement de gestion B est alors égale à 011, lui confirmant que les appareils domestiques A1 et A2 ont reçu la commande C. Cette information est erronée car l'appareil domestique a bien reçu la commande C mais n'a pu, pour des problèmes momentanés de communication transmettre directement son accusé de réception à l'équipement de gestion C.

Au temps t3 de début du slot s4, l'appareil domestique A3 diffuse un signal S porteur d'une information d'acquittement IACK qui porte l'information d'accusé de réception IAR qu'il connaît et qui vaut en l'occurrence 111.

Malencontreusement, aucun appareil domestique ni l'équipement domestique ne sont en mesure de recevoir un signal S porteur de cette information d'acquittement IACK diffusée par l'appareil domestique A3.

Au temps t4 de début du slot s5, l'appareil domestique A2 diffuse un signal S porteur d'une information d'acquittement IACK qui porte l'information d'accusé de réception IAR qu'il connaît et qui vaut en l'occurrence 111.

Malencontreusement, aucun autre appareil domestique n'est en mesure de recevoir le signal S porteur de l'information d'acquittement diffusé par l'appareil domestique A2 excepté l'équipement de gestion B qui met alors à jour l'information d'accusé de réception IARB qu'il connaît de valeur 011 en réalisant un OU logique entre cette information d'accusé de réception IARB et l'information d'accusé de réception 111 ainsi reçue. L'information d'accusé de réception IARB connue de l'équipement de gestion B est alors égale à 111, lui confirmant que tous les appareils domestiques destinataires de la commande C ont bien reçu cette commande.

Ainsi, l'équipement de gestion B est tout de même informé que l'appareil domestique A3 a bien reçu la commande C malgré que cet appareil domestique A3 ne lui a pas transmis directement son accusé de réception suite à un problème de communication survenu lorsque cet appareil domestique a émis un signal S porteur de son information d'acquittement IACK (slot s4).

Selon cette mise en oeuvre de l'invention, le procédé d'accusé de réception d'une commande est mis en oeuvre par échange de signaux modulés en fréquence et par partage de l'utilisation dans le temps de la bande de fréquence dédiée.

Un tel procédé peut alors être associé à un système de commande existant qui émet une commande par signaux qui ne sont pas modulés en fréquence et/ou qui n'utilise pas un tel partage temporel d'une bande de fréquence dédiée. Par exemple, les signaux qui portent une commande C sont des signaux qui sont modulés en amplitude autour d'une fréquence porteuse.

Afin d'assurer une intégration du procédé d'accusé de réception dans un tel système existant, il est alors nécessaire que les signaux qui portent une commande et les signaux qui portent l'information d'acquittement IACK soient synchrones dans le temps entre eux.

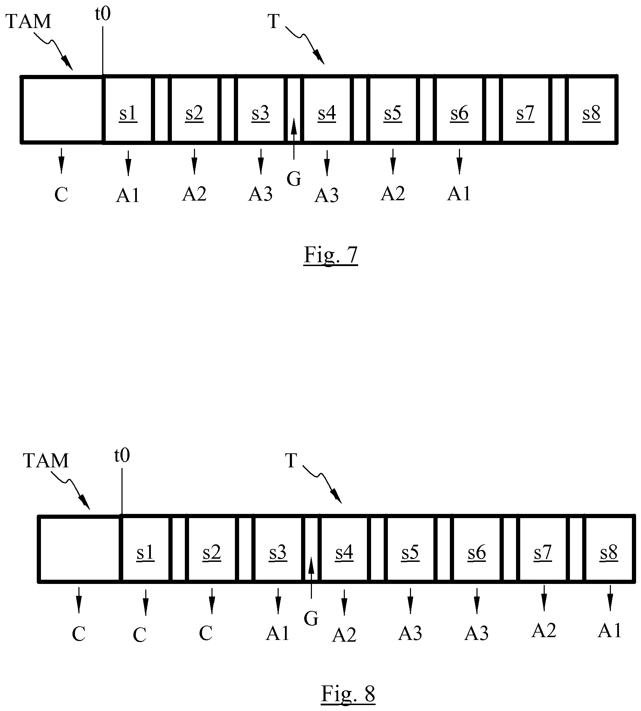

La Fig. 7 représente une illustration d'une telle synchronisation. La trame TAM représente la durée pendant laquelle l'équipement de gestion B émet un signal modulé en amplitude qui porte une commande C et la trame T, en l'occurrence identique selon cet exemple à celle de la Fig. 4, représente la durée pendant laquelle l'information d'acquittement IACK est diffusée entre appareils domestiques et/ou entre appareils domestiques et l'équipement de gestion B.

En procédant ainsi, le temps de référence t0, qui détermine le début du slot s1 de la trame T est donné par la fin d'émission de la commande C.

Par ailleurs, on observe que la durée d'émission d'une commande C, c'est-à-dire la durée de la trame TAM, est relativement courte comparée à celle de la trame T.

Il est avantageux que l'émission de la commande C soit répétée afin d'augmenter la probabilité que chaque appareil domestique reçoive cette commande C.

Selon un mode de réalisation de l'étape 100 du procédé, au moins un des slots de la trame T est dédié à l'équipement de gestion B pour qu'il réémette la commande C qu'il a préalablement émise.

De préférence, chaque slot de la trame T dédié à l'équipement de gestion B est alloué au début de la trame T.

La Fig. 8 représente un exemple de trame T dans laquelle deux slots de trame sont dédiés à l'équipement de gestion B.

Les deux slots alloués, notés s_{B1} et s_{B2}, sont les deux premiers de cette trame T.

De plus, lorsque deux trames T successives sont utilisées afin d'augmenter le nombre d'appareils domestiques destinataires d'une commande émise par l'équipement de gestion B, chaque slot dédié à l'émission de la commande C sont alloués dans la première des deux trames successives T.

Il faut noter que selon ce mode de réalisation de l'étape 100, les principes d'allocation des slots dédiés aux appareils domestiques restent inchangés, seul l'emplacement de ces slots est décalé par rapport au nombre de slots dédiés à l'équipement de gestion B.

Ainsi, en considérant le cas où les deux premiers slots s1 et s2 de la trame T sont dédiés à l'équipement B, lorsqu'un seul slot s_{Ai} de la trame T est dédié à chaque appareil domestique Ai, les slots s₃, s₄ et s₅ sont respectivement dédiés aux appareils domestiques A1, A2 et A3 au lieu des slots s₁, s₂ et s₃ tels que représentés sur la Fig. 3. De même, tels que illustrés à la Fig. 8, lorsque deux slots s_{Ai1} et s_{Ai2} de la trame T sont dédiés à chaque appareil domestique Ai, les slots s₃ et s₈ sont dédiés à l'appareil domestique A1, les slots s₄ et s₇ sont dédiés à l'appareil domestique A2 et les slots s₅ et s₆ sont dédiés à l'appareil domestique A3 au lieu des slots s₁ et s₆ dédiés à l'appareil domestique A1, des slots s₂ et s₅ dédiés à l'appareil domestique A2 et des slots s₃ et s₄ dédiés à l'appareil domestique A3 tels que représentés sur la Fig. 4.

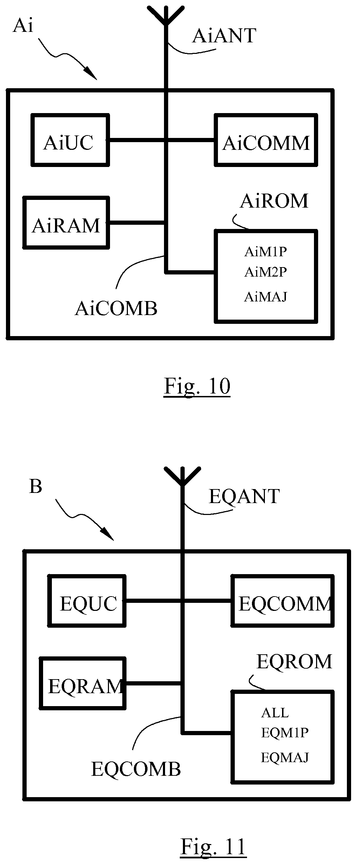

La Fig. 10 représente un mode de réalisation d'une architecture interne d'un appareil domestique Ai qui met en oeuvre les étapes 200, 300 et 400 du procédé d'accusé de réception d'une commande décrit à la Fig. 2. L'appareil domestique Ai comporte un bus de communication AiCOMB auquel sont reliés une unité centrale AiUC, une mémoire non volatile AiROM, une mémoire vive AiRAM, des moyens AiCOMM de communication radiofréquence et une antenne AiANT.

La mémoire non volatile AiROM mémorise les programmes qui mettent en oeuvre les étapes 200, 300 et 400. La mémoire non volatile AiROM est par exemple un disque dur. De manière plus générale, les programmes selon la présente invention sont mémorisés dans un moyen de stockage. Ce moyen de stockage est lisible par un microprocesseur. Ce moyen de stockage est intégré ou non à l'appareil domestique Ai, et peut être amovible. Lors de la mise sous tension de l'appareil domestique Ai, les programmes sont transférés dans la mémoire vive AiRAM qui contient alors le code exécutable de l'invention ainsi que les données nécessaires à la mise en oeuvre de l'invention.

L'appareil domestique Ai comporte des moyens AiM1 pour diffuser, par exemple au cours d'au moins un slot de trame T qui lui est dédié, un signal porteur d'une information d'acquittement IACK qui comporte en outre une information d'accusé de réception IAR qui reflète si chaque appareil domestique destinataire d'une même commande C a ou non reçu cette commande C. Ces moyens AiM1 utilisent entre autres les moyens de communication AiCOMM, l'antenne AiANT ainsi qu'un programme AiM1P, pour former l'information d'acquittement IACK, ainsi que le signal porteur de cette information.

De plus, l'appareil domestique Ai comporte des moyens AiM2 pour recevoir, par exemple sur chaque slot de la trame T, autre que celui ou ceux qui lui sont dédiés, un signal S porteur d'une information d'acquittement IACK. Ces moyens AiM2 utilisent entre autres les moyens de communication AiCOMM ainsi qu'un programme AiM2P, pour notamment obtenir l'information d'acquittement à partir d'un signal reçu au cours d'un slot de trame.

L'appareil domestique Ai comporte de plus des moyens AiMAJ pour mettre à jour l'information d'accusé de réception IAR comprise dans une information d'acquittement IACK qu'il a reçue à partir d'une information de mise à jour IMJi qui reflète si il a ou non préalablement reçu ladite commande. Les moyens AiMAJ sont mis en oeuvre par un programme.

L'appareil domestique Ai comporte aussi des moyens AiM3 pour diffuser un signal S porteur d'une information d'acquittement IACK qui comporte en outre l'information d'accusé de réception IAR ainsi mise à jour. Ces moyens AiM3 utilisent entre autres les moyens de communication AiCOMM ainsi qu'un programme AiM3P, pour former l'information d'acquittement IACK, ainsi que le signal porteur de cette information.

La Fig. 11 représente un mode de réalisation d'une architecture interne de l'équipement de gestion B qui met en oeuvre les étapes 500 et 600 et, selon un mode de réalisation 100, du procédé d'accusé de réception d'une commande décrit à la Fig. 2.

L'équipement de gestion B comporte un bus de communication EQCOMB auquel sont reliés une unité centrale EQUC, une mémoire non volatile EQROM, une mémoire vive EQRAM, des moyens EQCOMM de communication radiofréquence et une antenne EQANT.

La mémoire non volatile EQROM mémorise les programmes qui mettent en oeuvre les étapes 100, 200, 500 et 600. La mémoire non volatile EQROM est par exemple un disque dur. De manière plus générale, les programmes selon la présente invention sont mémorisés dans un moyen de stockage. Ce moyen de stockage est lisible par un microprocesseur. Ce moyen de stockage est intégré ou non à l'équipement de gestion B, et peut être amovible. Lors de la mise sous tension de l'équipement de gestion B, les programmes sont transférés dans la mémoire vive EQRAM qui contient alors le code exécutable de l'invention ainsi que les données nécessaires à la mise en oeuvre de l'invention.

L'équipement de gestion B comporte des moyens ALL pour allouer au moins un slot de trame T à chaque appareil domestique Ai d'un système SYST pour que cet appareil domestique Ai diffuse un signal S porteur d'une information d'acquittement IACK, ladite information d'acquittement IACK comportant en outre une information d'accusé de réception IAR qui reflète si chaque appareil domestique destinataire d'une commande C a ou non reçu cette commande C. Les moyens ALL sont mis en oeuvre par un programme.

L'équipement de gestion B comporte également des moyens EQM1 pour recevoir, par exemple sur chaque slot de trame, un signal S porteur d'une information d'acquittement IACK. Les moyens EQM1 utilisent entre autres les moyens de communication EQCOMM ainsi qu'un programme EQM1P, pour notamment obtenir l'information d'acquittement à partir d'un signal reçu au cours d'un slot de trame.

De plus, l'équipement de gestion B comporte des moyens EQMAJ pour mettre à jour une information d'accusé de réception IARB qu'il a préalablement mémorisée à partir de l'information d'accusé de réception IAR comprise dans une information d'acquittement IACK reçue. Les moyens EQMAJ sont mis en oeuvre par un programme.

## Revendications

1. Procédé d'accusé de réception d'une commande émise par un équipement de gestion d'un système de commande d'appareils domestiques par signaux radiofréquences, tel que chaque appareil domestique diffuse sur une zone géographique (R) un signal porteur d'une information d'acquittement, le procédé comportant:
- une étape (200) de réception par chaque appareil domestique se trouvant dans la zone géographique d'un signal porteur d'une information d'acquittement (IACK), ladite information d'acquittement comportant entre autres une information d'accusé de réception (IAR) qui reflète si chaque appareil domestique destinataire de ladite commande a ou non reçu cette commande,
- une étape (300) de mise à jour par chaque appareil domestique de l'information d'accusé de réception comprise dans une information d'acquittement qu'il a reçue à partir d'une information de mise à jour qui reflète si cet appareil domestique a ou non préalablement reçu ladite commande,
- une étape (400) d'émission par chaque appareil domestique d'un signal porteur d'une information d'acquittement (IACK) qui comporte entre autres l'information d'accusé de réception (IAR) ainsi mise à jour,
- une étape (500) de réception par l'équipement de gestion de chaque signal porteur d'une information d'acquittement (IACK), et
- une étape (600) de mise à jour par l'équipement de gestion des informations d'accusé de réception (IARB) qu'il a préalablement mémorisées à partir des information d'accusé de réception (IAR) comprises dans les informations d'acquittement reçues.

2. Procédé selon la revendication 1, **caractérisé en ce que** l'information d'accusé de réception (IAR) est portée par un ensemble d'autant de bits que d'appareils domestiques destinataires d'une même commande, chaque bit de l'information d'accusé de réception (IAR) portant alors l'état de réception de ladite commande par l'appareil domestique auquel ce bit se réfère.

3. Procédé selon la revendication 1 ou 2, **caractérisé en ce que** la mise à jour par chaque appareil domestique (Ai) de l'information d'accusé de réception (IAR) comprise dans une information d'acquittement (IACK) qu'il a reçue est réalisée en calculant un OU logique entre l'information d'accusé de réception ainsi reçue et une information de mise à jour (IMJi) qui reflète si cet appareil domestique (Ai) a ou non préalablement reçu ladite commande.

4. Procédé selon l'une des revendications 1 à 3, **caractérisé en ce que** l'information d'acquittement (IACK) comporte également des données relatives à un voire plusieurs états de chacun des appareils domestiques destinataires d'une même commande (C).

5. Procédé selon l'une des revendications précédentes, les signaux radiofréquences étant émis dans une bande de fréquence prédéfinie dont l'utilisation temporelle est définie par une trame d'intervalles de temps appelés slots, **caractérisé en ce qu'**il comporte
- une étape (100) d'allocation des slots de trame relative à chaque commande susceptible d'être émise par l'équipement de gestion à destination d'au moins un appareil domestique, au cours de laquelle au moins un slot de la trame est dédié à chaque appareil domestique pour que cet appareil domestique diffuse un signal porteur d'une information d'acquittement (IACK),
- au cours de ladite étape (200) de réception par un appareil domestique, l'appareil domestique écoute pendant chaque slot de la trame, autre que celui ou ceux qui leurs sont dédiés, dans l'attente de réception d'une information d'acquittement (IACK),
- au cours de ladite étape (400) de diffusion par un appareil domestique, un signal porteur de l'information d'accusé de réception (IAR) mise à jour est diffusé pendant le ou les slots qui sont dédiés à cet appareil domestique, et
- au cours de ladite étape (500) de réception par l'équipement de gestion, l'équipement de gestion écoute pendant chaque slot de la trame dans l'attente de réception d'un signal porteur d'une information d'acquittement.

6. Procédé selon la revendication 5, **caractérisé en ce qu'**au moins un seul slot de la trame (T) est dédié à chaque appareil domestique (Ai) pour qu'il émette l'information d'acquittement (IACK).

7. Procédé selon la revendication 1, **caractérisé en ce qu'**au moins un slot dédié à un appareil domestique et au moins un slot dédié à un autre appareil domestique appartiennent à deux trames successives.

8. Procédé selon l'une des revendications 5 à 7, **caractérisé en ce qu'**au moins un des slots de trame (T) est dédié à l'équipement de gestion (B) pour qu'il réémette une commande (C) qu'il a préalablement émise.

9. Système d'accusé de réception d'une commande émise par un équipement de gestion d'un système de commande d'appareils domestiques par signaux radiofréquences, tel que chaque appareil domestique diffuse sur une zone géographique (R) un signal porteur d'une information d'acquittement, le système comportant:
- des moyens de réception par chaque appareil domestique se trouvant dans la zone géographique d'un signal porteur d'une information d'acquittement (IACK), ladite information d'acquittement comportant entre autres une information d'accusé de réception (IAR) qui reflète si chaque appareil domestique destinataire de ladite commande a ou non reçu cette commande,
- des moyens de mise à jour par chaque appareil domestique de l'information d'accusé de réception comprise dans une information d'acquittement qu'il a reçue à partir d'une information de mise à jour qui reflète si cet appareil domestique a ou non préalablement reçu ladite commande,
- des moyens d'émission par chaque appareil domestique d'un signal porteur d'une information d'acquittement (IACK) qui comporte entre autres l'information d'accusé de réception (IAR) ainsi mise à jour,
- des moyens de réception par l'équipement de gestion de chaque signal porteur d'une information d'acquittement (IACK), et
- des moyens de mise à jour par l'équipement de gestion des informations d'accusé de réception (IARB) qu'il a préalablement mémorisées à partir des information d'accusé de réception (IAR) comprises dans les informations d'acquittement reçues.

## Patentansprüche

1. Verfahren zur Empfangsbestätigung eines von einer Verwaltungsausrüstung eines Steuersystems von Haushaltsgeräten durch Funksignale gesendeten Befehls, derart, dass jedes Haushaltsgerät über eine geographische Zone (R) ein Trägersignal einer Quittierungsinformation verbreitet, wobei das Verfahren aufweist:
- einen Schritt (200) des Empfangs, durch jedes Haushaltsgerät, das sich in der geographischen Zone befindet, eines Trägersignals einer Quittierungsinformation (IACK), wobei die Quittierungsinformation unter anderen eine Empfangsbestätigungsinformation (IAR) aufweist, die widerspiegelt, ob jedes Empfänger-Haushaltsgerät des Befehls diesen Befehl empfangen hat oder nicht,
- einen Schritt (300) der Aktualisierung, durch jedes Haushaltsgerät, der in einer Quittierungsinformation, die es empfangen hat, enthaltenen Empfangsbestätigungsinformation, ausgehend von einer Aktualisierungsinformation, die widerspiegelt, ob dieses Haushaltsgerät den Befehl vorher empfangen hat oder nicht,
- einen Schritt (400) des Sendens, durch jedes Haushaltsgerät, eines Trägersignals einer Quittierungsinformation (IACK), die unter anderen die so aktualisierte Empfangsbestätigungsinformation (IAR) aufweist,
- einen Schritt (500) des Empfangs, durch die Verwaltungsausrüstung, jedes Trägersignals einer Quittierungsinformation (IACK), und
- einen Schritt (600) der Aktualisierung, durch die Verwaltungsausrüstung, der Empfangsbestätigungsinformationen (IARB), die sie vorher gespeichert hat, ausgehend von den in den empfangenen Quittierungsinformationen enthaltenen Empfangsbestätigungsinformationen (IAR).

2. Verfahren nach Anspruch 1, **dadurch gekennzeichnet, dass** die Empfangsbestätigungsinformation (IAR) von einer Einheit von ebenso vielen Bits wie Empfangs-Haushaltsgeräten eines gleichen Befehls getragen wird, wobei jedes Bit der Empfangsbestätigungsinformation (IAR) dann den Empfangszustand des Befehls durch das Haushaltsgerät trägt, auf das dieses Bit sich bezieht.

3. Verfahren nach Anspruch 1 oder 2, **dadurch gekennzeichnet, dass** die Aktualisierung, durch jedes Haushaltsgerät (Ai), der in einer von ihm empfangenen Quittierungsinformation (IACK) enthaltenen Empfangsbestätigungsinformation (IAR) durchgeführt wird durch Berechnen eines logischen ODER zwischen der so empfangenen Empfangsbestätigungsinformation und einer Aktualisierungsinformation (IMJi), die widerspiegelt, ob dieses Haushaltsgerät (Ai) den Befehl vorher empfangen hat oder nicht.

4. Verfahren nach einem der Ansprüche 1 bis3, **dadurch gekennzeichnet, dass** die Quittierungsinformation (IACK) ebenfalls Daten bezüglich eines oder sogar mehrerer Zustände jedes der Empfangs-Haushaltsgeräte eines gleichen Befehls (C) aufweist.

5. Verfahren nach einem der vorhergehenden Ansprüche, wobei die Funksignale in einem vordefinierten Frequenzband gesendet werden, dessen zeitliche Verwendung von einem Rahmen von Slots genannten Zeitintervallen definiert wird, **dadurch gekennzeichnet, dass** es aufweist
- einen Schritt (100) der Zuweisung des Rahmenslots bezüglich jedes Befehls, der von der Verwaltungsausrüstung an mindestens ein Haushaltsgerät gesendet werden kann, während dessen mindestens ein Slot des Rahmens jedem Haushaltsgerät zugeordnet wird, damit dieses Haushaltsgerät ein Trägersignal einer Quittierungsinformation (IACK) verbreitet,
- während des Schritts (200) des Empfangs durch ein Haushaltsgerät, das Haushaltsgerät während jedes Slots des Rahmens anders als derjenige oder diejenigen, die ihnen zugeordnet sind, abhört, in Erwartung des Empfangs einer Quittierungsinformation (IACK),
- während des Schritts (400) der Verbreitung durch ein Haushaltsgerät ein Trägersignal der aktualisierten Empfangsbestätigungsinformation (IAR) während des oder der Slots verbreitet wird, die diesem Haushaltsgerät zugeordnet sind, und
- während des Schritts (500) des Empfangs durch die Verwaltungsausrüstung die Verwaltungsausrüstung während jedes Slots des Rahmens abhört, in Erwartung des Empfangs eines Trägersignals einer Quittierungsinformation.

6. Verfahren nach Anspruch 5, **dadurch gekennzeichnet, dass** mindestens ein einziger Slot des Rahmens (T) jedem Haushaltsgerät (Ai) zugeordnet ist, damit es die Quittierungsinformation (IACK) sendet.

7. Verfahren nach Anspruch 1, **dadurch gekennzeichnet, dass** mindestens ein einem Haushaltsgerät zugeordneter Slot und mindestens ein einem anderen Haushaltsgerät zugeordneter Slot zu zwei aufeinanderfolgenden Rahmen gehören.

8. Verfahren nach einem der Ansprüche 5 bis 7, **dadurch gekennzeichnet, dass** mindestens einer der Rahmenslots (T) der Verwaltungsausrüstung (B) zugeordnet ist, damit sie einen Befehl (C) erneut sendet, den sie vorher gesendet hat.

9. Empfangsbestätigungssystem eines von einer Verwaltungsausrüstung eines Steuersystems von Haushaltsgeräten durch Funksignale gesendeten Befehls, derart, dass jedes Haushaltsgerät über eine geographische Zone (R) ein Trägersignal einer Quittierungsinformation verbreitet, wobei das System aufweist:
- Einrichtungen zum Empfang, durch jedes Haushaltsgerät, das sich in der geographischen Zone befindet, eines Trägersignals einer Quittierungsinformation (IACK), wobei die Quittierungsinformation unter anderen eine Empfangsbestätigungsinformation (IAR) aufweist, die widerspiegelt, ob jedes Empfangs-Haushaltsgerät des Befehls diesen Befehl empfangen hat oder nicht,
- Einrichtungen zur Aktualisierung, durch jedes Haushaltsgerät, der in einer Quittierungsinformation, die es empfangen hat, enthaltenen Empfangsbestätigungsinformation, ausgehend von einer Aktualisierungsinformation, die widerspiegelt, ob dieses Haushaltsgerät den Befehl vorher empfangen hat oder nicht,
- Einrichtungen zum Senden, durch jedes Haushaltsgerät, eines Trägersignals einer Quittierungsinformation (IACK), die unter anderen die so aktualisierte Empfangsbestätigungsinformation (IAR) aufweist,
- Einrichtungen zum Empfang, durch die Verwaltungsausrüstung, jedes Trägersignals einer Quittierungsinformation (IACK), und
- Einrichtungen zur Aktualisierung, durch die Verwaltungsausrüstung, der Empfangsbestätigungsinformationen (IARB), die sie vorher gespeichert hat, ausgehend von den in den empfangenen Quittierungsinformationen enthaltenen Empfangsbestätigungsinformationen (IAR).

## Claims

1. Method of acknowledgement of receipt of a command sent by a management device of a system for controlling domestic appliances by radiofrequency signals, such that each domestic appliance broadcasts over a geographical zone (R) a carrier signal bearing an acknowledgement information item, the method comprising:
- a step (200) of reception by each domestic appliance situated in the geographical zone of a carrier signal bearing an acknowledgement information item (IACK), said acknowledgement information item comprising inter alia an acknowledgement-of-receipt information item (IAR) which reflects whether each domestic appliance for which said command is destined has or has not received this command,
- a step (300) of updating by each domestic appliance of the acknowledgement-of-receipt information item included in an acknowledgement information item that it has received on the basis of an update information item which reflects whether this domestic appliance has or has not previously received said command,
- a step (400) of sending by each domestic appliance of a carrier signal bearing an acknowledgement information item (IACK) which comprises inter alia the acknowledgement-of-receipt information item (IAR) thus updated,
- a step (500) of receipt by the management device of each carrier signal bearing an acknowledgement information item (IACK), and
- a step (600) of updating by the management device of the acknowledgement-of-receipt information items (IARB) that it has previously stored on the basis of the acknowledgement-of-receipt information items (IAR) included in the acknowledgement information items received.

2. Method according to Claim 1, **characterized in that** the acknowledgement-of-receipt information item (IAR) is carried by a set of as many bits as domestic appliances for which one and the same command is destined, each bit of the acknowledgement-of-receipt information item (IAR) then carrying the state of receipt of said command by the domestic appliance to which this bit refers.

3. Method according to Claim 1 or 2, **characterized in that** the updating by each domestic appliance (Ai) of the acknowledgement-of-receipt information item (IAR) included in an acknowledgement information item (IACK) that it has received is carried out by calculating a logical OR between the acknowledgement-of-receipt information item thus received and an update information item (IUPi) which reflects whether this domestic appliance (Ai) has or has not previously received said command.

4. Method according to one of Claims 1 to 3, **characterized in that** the acknowledgement information item (IACK) also comprises data relating to one or indeed several states of each of the domestic appliances for which one and the same command (C) is destined.

5. Method according to one of the preceding claims, the radiofrequency signals being sent in a predefined frequency band whose temporal use is defined by a frame of time intervals called slots, **characterized in that** it comprises
- a step (100) of allocating the slots of a frame relating to each command liable to be sent by the management device destined for at least one domestic appliance, in the course of which at least one slot of the frame is dedicated to each domestic appliance so that this domestic appliance broadcasts a carrier signal bearing an acknowledgement information item (IACK),
- in the course of said step (200) of reception by a domestic appliance, the domestic appliance listens during each slot of the frame, other than the slot or slots which are dedicated to them, on standby awaiting receipt of an acknowledgement information item (IACK),
- in the course of said step (400) of broadcasting by a domestic appliance, a carrier signal bearing the updated acknowledgement-of-receipt information item (IAR) is broadcast during the slot or slots which are dedicated to this domestic appliance, and
- in the course of said step (500) of receipt by the management device, the management device listens during each slot of the frame on standby awaiting receipt of a carrier signal bearing an acknowledgement information item.

6. Method according to Claim 5, **characterized in that** at least one single slot of the frame (T) is dedicated to each domestic appliance (Ai) so that it sends the acknowledgement information item (IACK).

7. Method according to Claim 1, **characterized in that** at least one slot dedicated to one domestic appliance and at least one slot dedicated to another domestic appliance belong to two successive frames.

8. Method according to one of Claims 5 to 7, **characterized in that** at least one of the frame (T) slots is dedicated to the management device (B) so that it re-sends a command (C) that it has previously sent.

9. System for acknowledgment of receipt of a command sent by a management device of a system for controlling domestic appliances by radiofrequency signals, such that each domestic appliance broadcasts over a geographical zone (R) a carrier signal bearing an acknowledgement information item, the system comprising
- means of receipt by each domestic appliance situated in the geographical zone of a carrier signal bearing an acknowledgement information item (IACK), said acknowledgement information item comprising inter alia an acknowledgement-of-receipt information item (IAR) which reflects whether each domestic appliance for which said command is destined has or has not received this command,
- means of updating by each domestic appliance of the acknowledgement-of-receipt information item included in an acknowledgement information item that it has received on the basis of an update information item which reflects whether this domestic appliance has or has not previously received said command,
- means of sending by each domestic appliance of a carrier signal bearing an acknowledgement information item (IACK) which comprises inter alia the acknowledgement-of-receipt information item (IAR) thus updated,
- means of receipt by the management device of each carrier signal bearing an acknowledgement information item (IACK), and
- means of updating by the management device of acknowledgement-of-receipt information items (IARB) that it has previously stored on the basis of the acknowledgement-of-receipt information items (IAR) included in the acknowledgement information items (IACK) received.
